# EUROPEAN PATENT APPLICATION

(11) **EP 4 614 278 A2**
(43) Date of publication of application: **10.09.2025**
(21) Application number: 25161838.5
(22) Date of filing: 05.03.2025
(51) Int. Cl.: G06F 1/18

(54) **MODULE MOUNTING STRUCTURE AND MINER**

(30) Priority: 05.03.2024 CN 202420424950 U
(71) Applicant: Bitdeer Semiconductor Technology PTE. LTD., 049514 Singapore (SG)
(72) Inventor: LI, Weiguo, Singapore (SG); DAI, Qiang, Singapore (SG)
(74) Representative: Wang, Bo

(57) **Abstract**

The present utility model provides a module mounting structure and a miner. The module mounting structure comprises a first mounting structure disposed on an upper side surface of the first module and a second mounting structure disposed on a side surface of the second module; the first mounting structure comprises at least one slide rail comprising a connection portion and an extension portion, the extension portion being connected to the first module via the connection portion, a sliding groove being formed between the extension portion and the first module; an insertion notch is provided on the extension portion; the second mounting structure comprises at least one hook at a position corresponding to the slide rail; the hook is connected to the second module; at least a portion of the hook may extend through the insertion notch into the sliding groove; when the hook and the insertion notch are staggered in position, the hook located in the sliding groove hooks onto the extension portion. The module mounting structure and the miner according to the present utility model have advantages such as convenient and simple mounting and the saving of time and efforts.

## Description

### FIELD

The present utility model relates to the field of mounting of structures, and particularly to a module mounting structure and a miner.

### BACKGROUND

Many products available in the market all achieve functions of such products via mutual cooperation between several modules. For example, in the field of miners for earning Bitcoins etc., a miner usually comprises a computing power module, a power supply module etc., wherein the power supply module powers the computing power module. A fixing structure needs to be provided to mount the power supply module and the computing power module together. In the prior art, screws are usually employed to achieve affixation between the modules. The field of miners is no exception. However, the fixing operations with screws are complicated, and the mounting duration is long especially in a case where there are a large number of screws, which do not facilitate improving the mounting efficiency.

### SUMMARY

Based on the present state of the art, a main object of the present utility model is to provide a module mounting structure and a miner.

In order to achieve the above object, the present utility model employs the following technical solutions: the utility model provides a module mounting structure for achieving the mounting of a first module and a second module to each other, wherein the module mounting structure comprises a first mounting structure disposed on a side surface of the first module and a second mounting structure disposed on a side surface of the second module; the first mounting structure comprises at least one slide rail comprising a connection portion and an extension portion, the extension portion being connected to the first module via the connection portion, a sliding groove being formed between the extension portion and the first module; an insertion notch is provided on the extension portion; the second mounting structure comprises at least one hook at a position corresponding to the slide rail; the hook is connected to the second module; at least a portion of the hook may extend through the insertion notch into the sliding groove; when the hook and the insertion notch are staggered in position, the hook located in the sliding groove hooks onto the extension portion so as to achieve the mounting and fixing of the first module and the second module to each other.

Preferably, the second module comprises a metal shell; the hook is formed by stamping of part of the metal shell; the hook comprises a body portion and a hook body portion, the body portion is fixedly connected with the second module at both ends of the slide rail in the extension direction; the hook body portion is connected to the body portion in a direction perpendicular to the extension direction of the slide rail; in the extension direction of the slide rail, a size of the hook body portion is smaller than that of the insertion notch.

Preferably, the slide rail comprises a plurality of slide rails, and a number of the insertion notches disposed on the extension portion of each of the slide rails is one or more; a number of hooks included by the second mounting structure is smaller than or equal to that of the insertion notches; upon mounting, positions of the hooks correspond to those of the insertion notches.

Preferably, the slide rails comprise a first slide rail and a second slide rail arranged spaced apart, and the insertion notches of the first slide rail and the insertion notches of the second slide rail open towards each other; the hook comprises a body portion and a hook body portion connected to each other, and the hook body portion is connected to the second module via the body portion; the hook body portions of the hooks corresponding to the first slide rail and the second slide rail face towards each other.

Preferably, one of the first mounting structure and the second mounting structure further comprises a mounting strip, the other of the first mounting structure and the second mounting structure further comprises a lug, a mounting hole is provided at an end of the mounting strip, and a fixing structure is fixed in the mounting hole through the lug; or the mounting hole mating with the lug is provided at an end of the slide rail.

Preferably, the slide rails comprise a first slide rail, a second slide rail and a third slide rail which are disposed at intervals and extend in a horizontal direction, the third slide rail being located between the first slide rail and the second slide rail; the first slide rail and the second slide rail are disposed at a top and a bottom of the side surface of the first module, respectively; the first mounting structure is integrally formed on the first module; the second mounting module is integrally formed on the second module.

The utility model further provides a miner comprising the module mounting structure and the first module and the second module described above; the first module and the second module are fixedly connected by the module mounting structure.

Preferably, the miner further comprises a third module fixed on the first module and/or the second module; the first module and/or the second module and/or the third module comprises a box body and a lid body having a rectangular parallelepiped shape, the lid body being used for closing an opening of the box body; the box body comprises a first end panel, a first side panel and a second side panel, the first side panel and the second side panel are connected to opposed ends of the first end panel, and a distance between the two side panels is smaller than a size of the first end plate so that an end of the lid body may abut against the end panel; the side panel comprise a side panel body and a guide structure, the guide structure being fixed at an end of the side panel body adjacent to the first end panel; a distance between the guide structure and a bottom of the box body gradually reduces in a direction away from the first end panel towards the first end panel; the lid body comprises a top plate, a first side plate and a second side plate, the first side plate and the second side plate being connected to opposed ends of the top plate; a fastening strip is disposed at a bottom of an inner wall of each of the first side plate and the second side plate, and a distance between the two fastening strips is equal to that between outer walls of the two side plate bodies; a distance between inner walls of the first side plate and the second side plate is greater than or equal to that between outer walls of the guide structures on the first side panel and the second side panel; a height of the fastening strips is smaller than or equal to a minimum distance between the guide structure and the bottom of the box body.

Preferably, a length of the guide structure is less than 40% of the length of the side panel; a bottom surface of the guide structure is inclined at an angle in a range of 0°-45°.

Preferably, the first module is a computing power module, the second module is a power supply module, and the third module is a control module; a size of the side surface of the first module coincides with that of the side surface of the second module, or the size of the side surface of the second module is smaller than that of the side surface of the first module.

The present utility model provides the module mounting structure and the miner; the insertion notches are provided on the slide rail of one module of the module mounting structure; the provision of the insertion notches helps the user to extend the hooks on the other module through the insertion notches into the sliding groove, so that the user needn't move the slide rail in the entire length to complete the fixation of the first module and second module to each other. Particularly in a case where the modules included in the miner have a large weight, the present utility model saves the user's time and efforts and exhibits convenient and simple mounting.

Other advantageous effects of the present utility model will be described by introducing specific technical features and technical solutions in specific embodiments. Those skilled in the art can understand the advantageous technical effects resulting from the technical features and technical solutions by reading through the introduction of these technical features and technical solutions.

### BRIEF DESCRIPTION OF THE DRAWINGS

Hereinafter, preferred embodiments of a module mounting structure and a miner according to the present utility model will be described with reference to the following figures. In the figures:
FIG. 1 is a perspective structural view of a miner according to the present utility model.
FIG. 2 and FIG. 3 are a perspective structural view and a right view of a housing of a first module included in the miner according to the present utility model.
FIG. 4 and FIG. 5 are a perspective structural view and a left view of a shell of a second module included in the miner according to the present utility model.
FIG. 6 is a structural schematic view of engagement of a sliding groove and a hook included in the module mounting structure according to the present utility model.
FIG. 7 is a perspective structural view of a third module of the miner according to the present utility model.
FIG. 8 and FIG. 9 are exploded views of a box body and a lid body included in the third module at different angles.

### Description of Reference Numerals:

1: a miner; 10: a first module; 11: a slide rail; 111: a first slide rail; 112: a second slide rail; 113: a third slide rail; 114: a connection portion; 1141: a mounting hole; 115: an extension portion; 1151: an in insertion notch; 12: a mounting strip; 20: a second module; 21: a hook; 211: a body portion; 212: a hook body portion; 30: a third module; 301: a module box; 31: a box body; 311: a first end panel; 312: a second end panel; 313: a first side panel; 3131: a side panel body; 3132: a guide structure; 314: a second side panel; 32: a lid body; 321: a top plate; 323: a first side plate; 3231: a fastening strip; 324: a second side plate; 322, a first end plate; 202: a lug; 101: a housing; 201: a shell.

### DETAILED DESCRIPTION OF EMBODIMENTS

The present utility model will be described based on embodiments, but the present utility model is not only limited to these embodiments. In the following detailed depictions of the present utility model, some specific details are presented in detail. In order to avoid confusing the spirit of the present utility model, well-known methods, processes, procedures and elements are not described in detail.

In addition, those having ordinary skill in the art should appreciate that the figures are provided herein for illustrative purposes and are not necessarily drawn to scale.

Unless the context clearly requires otherwise, words such as "comprise" and "contain" throughout in the whole description and the claim set should be understood as having the meaning of containing rather than exclusive or exhaustive, i.e., as having the meaning of "including but not limited to".

In the description of the present utility model, it is to be understood that the terms "first", "second" etc. are used for descriptive purposes only and are not to be understood as indicating or implying relative importance. In addition, in the description of the present utility model, the meaning of "a plurality of" means two or more unless otherwise specified.

The present utility model provides a module mounting structure for achieving the mounting of a first module and a second module to each other. The module mounting structure comprises a first mounting structure disposed on a side surface of the first module and a second mounting structure disposed on a side surface of the second module.

The first mounting structure comprises at least one slide rail comprising a connection portion and an extension portion, the extension portion being connected to the first module via the connection portion, a sliding groove being formed between the extension portion and the first module; an insertion notch is provided on the extension portion.

The second mounting structure comprises at least one hook at a position corresponding to the slide rail; the hook is connected to the second module.

At least a portion of the hook may extend through the insertion notch into the sliding groove; when the hook and the insertion notch are staggered in position, the hook located in the sliding groove hooks onto the extension portion so as to achieve the mounting and fixing of the first module and the second module to each other.

The utility model further provides a miner comprising the module mounting structure and the first module and the second module described above; the first module and the second module are fixedly connected by the module mounting structure.

The module mounting structure and the miner according to the present utility model are described in detail as follows.

The present utility model provides a module mounting structure for achieving the mounting of a first module 10 and a second module 20 to each other. The module mounting structure comprises a first mounting structure disposed on a side surface of the first module and a second mounting structure disposed on a side surface of the second module 20.

The first mounting structure comprises at least one slide rail 11 comprising a connection portion 114 and an extension portion 115, the extension portion 115 being connected to the first module 10 via the connection portion 114, a sliding groove being formed between the extension portion 115 and the first module 10; an insertion notch 1151 is provided on the extension portion 115.

The second mounting structure comprises at least one hook 21 at a position corresponding to the slide rail 11; the hook 21 is connected to the second module 20.

At least a portion of the hook 21 may extend through the insertion notch 1151 into the sliding groove; when the hook 21 and the insertion notch 1151 are staggered in position, the hook 21 located in the sliding groove hooks onto the extension portion 115 so as to achieve the mounting and fixing of the first module 10 and the second module 20 to each other.

The utility model further provides a miner 1 comprising the module mounting structure and the first module 10 and the second module 20 described above; the first module 10 and the second module 20 are fixedly connected by the module mounting structure.

The module mounting structure and the miner 1 according to the present utility model are described in detail as follows.

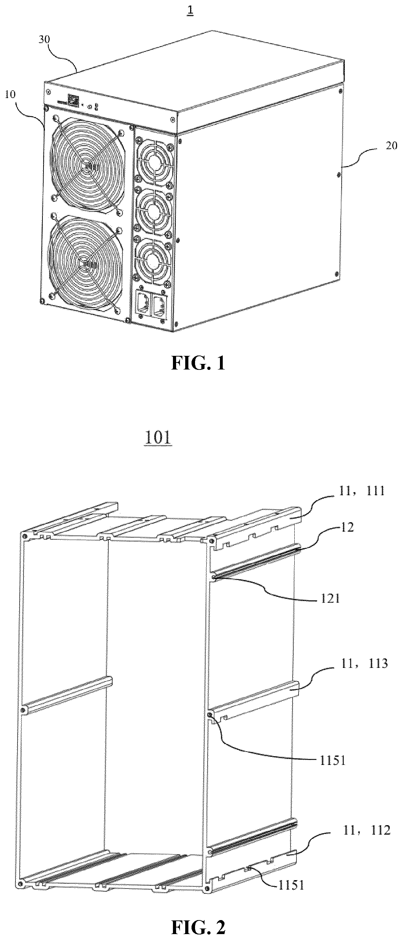

Referring to FIG. 1, the present utility model provides a miner 1 for performing data processing. The miner 1 comprises a first module 10, a second module 20 and a third module 30, wherein the first module 10 and the second module 20 are disposed side by side and fixedly connected to each other via the module mounting structure; specifically, a side surface of the first module 10 and a side surface of the second module 20 achieve the fixing of the first module 10 and the second module 20 via the module mounting structure. The third module 30 is fixed on top of the first module 10 and the second module 20.

As one embodiment, the first module 10 is a computing power module, the second module 20 is a power supply module, and the third module 30 is a control module. It may be appreciated that the functions of the first module 10, the second module 20 and the third module 30 are not limited; the first module 10 may also be a power module or a control module or other functional module; the second module 20 may also be a computing power module or a control module or other functional module; and the third module 30 may be a computing power module, a power supply module or other functional module.

It may be appreciated that the module mounting structure between the first module 10 and the second module 20 may be adapted for fixed connection of the side surfaces of any two modules. The first module 10 and the second module 20 are not limited to the modules included by the miner 1, but may also be modules included by any other product.

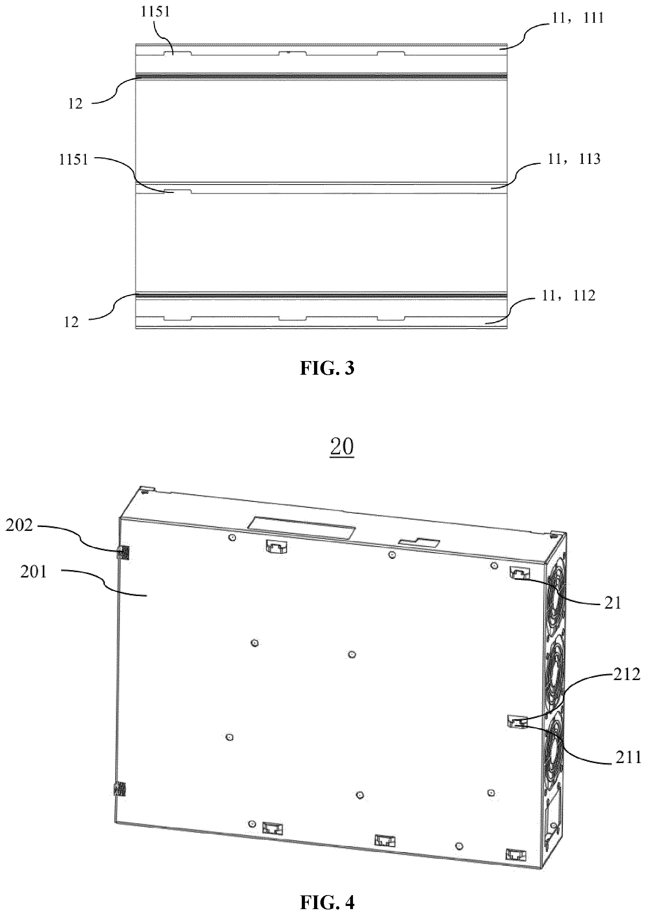

Referring to FIG. 2 and FIG. 3, the first module 10 comprises a housing 101 in which elements are received. The module mounting structure comprises a first mounting structure disposed on a side surface of the housing 101 adjacent to the second module 20. The first mounting structure comprises at least one slide rail; in the present embodiment, the first mounting structure comprises a first slide rail 111, a second slide rail 112 and a third slide rail 113 which are disposed at intervals and extend in a horizontal direction, wherein the first slide rail 111 and the second slide rail 112 are disposed at the top and the bottom of the side surface of the first module 10, respectively, and the third slide rail 113 is disposed between the first slide rail 111 and the second slide rail 112.

The first slide rail 111, the second slide rail 112 and the third slide rail 113 all comprise a connection portion 114 and an extension portion 115, the extension portion 115 is connected to a side surface of the first module 10 via the connection portion 114, a sliding groove is formed between the extension portion 115 and the first module 10, and at least one insertion notch 1151 is disposed on the extension portion 115. The number of the insertion notches 1151 on the first slide rail 111, the second slide rail 112 and the third slide rail 113 may stay consistent or inconsistent, as long as it is ensured that each slide rail comprises at least one insertion notch 1151. As shown in FIG. 2 and FIG. 3, the first slide rail 111 and the second slide rail 112 are each provided with two insertion notches 1151, and the third slide rail 113 is provided with one insertion notch 1151. Preferably, the insertion notches 1151 on the first slide rail 111, the second slide rail 112 and the third slide rail 113 are aligned in a vertical direction.

It may be appreciated that the number of slide rails may be adjusted according to factors such as the size and weight of the products. In some embodiments, the number of slide rails may be one, two or more.

In some embodiments, the insertion notches 1151 of at least two slide rails open towards each other, i.e., the opening directions of the sliding grooves are opposed. As a specific embodiment, the insertion notches 1151 of the first slide rail 111 and the second slide rail 112 open towards each other so that the relative movement between the first module 10 and the second module 20 may be restricted in the vertical direction.

As one embodiment, the first mounting structure further comprises a mounting strip 12 extending in a horizontal direction and fixed to the side surface of the housing 101. A mounting hole 121 is disposed on an end face of the mounting strip 12 and used for a fixed connection between the first module 10 and the second module 20.

As a variant embodiment, the mounting hole 1151 is disposed at an end face of the slide rail 11. As another variant embodiment, the end face of the slide rail 11 is provided with the mounting hole 1151, and the end face of the mounting strip 12 is provided with the mounting hole 121.

As one embodiment, the housing 101 is made of a metal, and the first mounting structure is integrally formed with the housing 101.

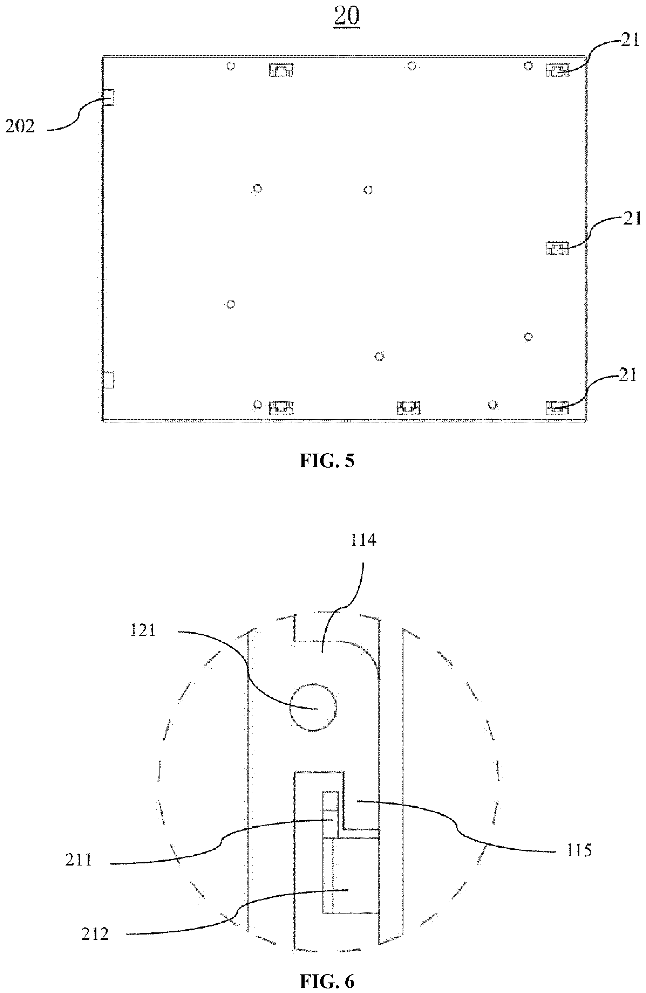

Referring to FIG. 4 and FIG. 5, a second mounting structure is provided on a side surface of the second module 20, and the second mounting structure comprises at least one hook 21 at a position corresponding to the slide rail 11; the hook 21 is connected to the second module 20.

Referring to FIG. 6, at least a portion of the hook 21 may extend thorough the insertion notch 1151 into the sliding groove; when the hook 21 and the insertion notch 1151 are staggered in position, the hook 21 located in the sliding groove hooks onto the extension portion 115 so as to achieve the mounting and fixing of the first module 10 and the second module 20 to each other. It may be appreciated that under the action of gravity, the portion of the hook 21 located in the sliding groove hooks onto the extension portion 115.

As one embodiment, the insertion notches 1151 on the second slide rail 112 at the bottom of the side surface of the first module 10 open upwards, so that the second module 20 may hook onto the extension portion 115 by the hook 21 under the action of gravity.

As one embodiment, the hook 21 comprises a body portion 211 and a hook body portion 212, the hook body portion 212 is connected to the second module 20 via the body portion 211, and the body portion 211 is fixedly connected with the second module 20 at both ends of the slide rail 11 in the extension direction; the hook body portion 212 is connected to the body portion 211 in a direction perpendicular to the extension direction of the slide rail 11.

As one embodiment, the second module 20 comprises a metal shell 201; the hook 21 is formed by stamping of part of the metal shell.

As one embodiment, the number of hooks 21 included by the second mounting structure is smaller than or equal to that of the insertion notches 1151; upon mounting, the positions of the hooks 21 correspond to those of the insertion notches 1151, so that all the hooks 21 can extend through the insertion notches 1151 into the sliding groove. After the hooks 21 extend through the insertion notch 1151 into the sliding groove, the first module 10 or the second module 20 is moved so that the positions of the hooks 21 are offset from those of the insertion notches 1151, and the hooks 21 hook onto the extension portion 115 under the action of gravity.

It may be appreciated that in the extension direction of the slide rail 11, the size of the hook body portion 212 is necessarily smaller than that of the insertion notch 1151 so that the hook body portion 212 may extend through the insertion notch 1151 into the sliding groove.

As one embodiment, when the insertion notches 1151 on different slide rails 11 open towards each other, the hook body portions 212 corresponding to positions of the different slide rails 11 open towards each other so that the hook body portions 212 can simultaneously enter the sliding grooves through the corresponding insertion notches 1151.

As one embodiment, the second mounting structure further comprises a lug 202 through which a fixing structure is fixed in the mounting hole 121 or the mounting hole 1151, thereby fixing the first module 10 and the second module 20 in position in the extension direction of the slide rail 11 and preventing relative movement therebetween. It may be appreciated that the position of the mounting strip 12 provided with the mounting hole 121 and the position of the lug 202 is interchangeable, for example, the mounting strip 12 is disposed on the side surface of the second module 20, and the lug 202 is disposed on the first module 10. The lug 202 may be located at a front end or a rear end of the second module.

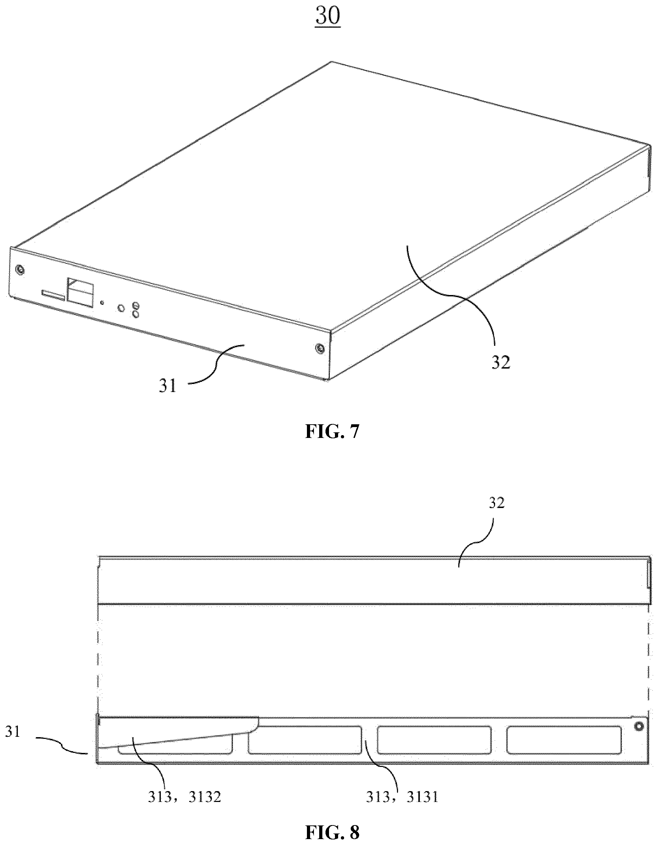

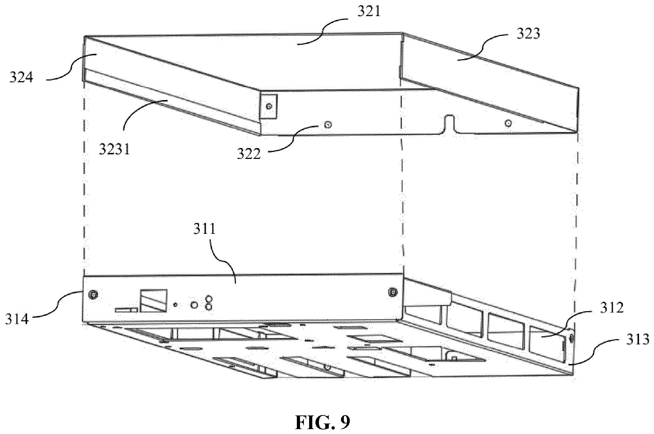

Referring to FIG. 7, FIG. 8 and FIG. 9, the third module 30 comprises a box body 31 and a lid body 32 having a rectangular parallelepiped shape, the lid body 32 being used for closing an opening of the box body 31.

As one embodiment, the box body 31 comprises a first end panel 311, a second end panel 312, a first side panel 313 and a second side panel 314, wherein the first end panel 311, the first side panel 313, the second end panel 312 and the second side panel 314 are connected to form a rectangular parallelepiped. The first end panel 311 and the second end panel 312 are located at one pair of opposed ends of the third module 30, and the first side panel 313 and second side panel 314 are located at the other pair of opposed ends of the third module 30.

As one embodiment, the first side panel 313 and second side panel 314 are connected to opposed ends of the first end panel 311, with a distance between the two side panels being smaller than the size of first end panel 311 so that the end of lid body 32 may abut against the end plate 322. In use, one end of the lid body 32 covers the box body 31 from an end close to the second end panel 312; the lid body 32 is pushed so that the lid body 32 moves from the end close to the second end panel 312 to a position close to the first end panel 311. Since the distance between the two side panels is smaller than the size of the first end panel 311, when the lid body 32 is pushed to the position of the first end panel 311, the end of the lid body 32 will abut against the first end panel 311, thereby limiting a movement stroke of the lid body 32.

As one embodiment, the side panel comprises a side panel body 3131 and a guide structure 3132. The guide structure 3132 is fixed to an end of the side panel body 3131 adjacent to the first end panel 311, and a distance between the guide structure 3132 and the bottom of the box body 31 gradually reduces in a direction away from the first end panel 311 towards the first end panel 311. That is, the bottom surface of the guide structure 3132 has a ramp structure. As one embodiment, the bottom surface of the guide structure 3132 is inclined at an angle in a range of 20°-45°.

As one embodiment, the lid body 32 comprises a top plate 321, a first side plate 323, a second side plate 324 and a first end plate 322. The top plate 321 has a rectangular shape. The first side plate 323, the second side plate 324 and the first end plate 322 are connected to the top plate 321 in three different directions, respectively. It may be appreciated that in a case where the second end panel 312 is present, the first end plate 312 may be omitted; in a case where the first end plate 322 is present, the second end panel 312 may be omitted.

As one embodiment, the first side plate 323 and the second side plate 324 are connected to opposed ends of the top plate 321, a fastening strip 3231 is disposed at the bottom of an inner wall of each of the first side plate 323 and second side plate 324, and a distance between the two fastening strips 3231 is equal to that between outer walls of the two side plate bodies. When the lid body 32 covers the box body 31, the fastening strips 3231 contact the side plate bodies so that the lid body 32 tightly covers the box body 31. A height of the fastening strips 3231 is smaller than or equal to a minimum distance between the guide structure 3132 and the bottom of the box body 31. Upon mounting, the fastening strip 3231 and the guide structure 3132 do not interfere with each other without causing a mounting obstacle. It may be appreciated that the height of the fastening strip 3231 here refers to the height of the fastening strip 3231 at a position corresponding to the guide structure 3132, and the heights at remaining positions is not limited herein.

As one embodiment, the fastening strip 3231 may be rectangular, or may have other regular or irregular shape, such as triangular, trapezoidal, etc.

As one embodiment, a distance between inner walls of the first side plate 323 and the second side plate 324 is greater than or equal to that between outer walls of the guide structures 3132 on the first side panel 313 and the second side panel 314, so that the lid body 32 can smoothly cover the box body 31.

As one embodiment, a length of the guide structure 3132 is less than 40% of the length of the side plate; a bottom surface of the guide structure 3132 is inclined at an angle in a range of 0°-45°.

As one embodiment, the third module 30 may be secured on the top of the first module 10 or the second module 20.

As one embodiment, the first module 10 and/or the second module 20 may also employ the structure of the box body 31 and the lid body 32 as described above.

As one embodiment, sizes of the side surfaces of the first module 10 and the second module 20 coincide with each other, or the size of the side surface of the second module 20 is smaller than that of the side surface of the first module 10.

As one embodiment, after the lid body 32 covers the box body 31, the first end plate 322 and the second end panel 312 are locked with screws to achieve the locking of the lid body 32 and the box body 31.

When the lid body 32 needs to cover the box body 31, the user may hold, with a hand, one end of the lid body 32 where the first end plate 322 lies, and places the other end opposite to the first end plate 322 vertically downward from a position of the side plate adjacent to the guide structure 3132 so that the other end opposite to the first end plate 322 covers the box body 31; the user continues to apply a force to the end where the first end plate 322 lies to move the lid body 32 towards the first end panel 311, the inclined bottom surface of the guide structure 3132 may cooperate with the fastening strips 3231 to guide the lid body 32 to slide. When the lid body 32 abuts against the first end panel 311, the lid body 32 duly covers the box body 31.

In a state that the lid body 32 completely, duly covers the box body 31, when the lid body 32 needs to be removed, since the guide structure 3132 blocks the fastening strip 3231 in the vertical direction, the lid body 32 cannot be removed directly in the vertical direction; the user needs to pull the lid body 32 in a direction away from the first end panel 311; as an operation manner, the user may lift one end of the lid body 32 vertically at the position of the second end panel 312; since the bottom surface of the guide structure 3132 is an inclined structure, when the inclination angle of the fastening strip 3231 is less than that of the bottom surface of the guide structure 3132, the guide structure 3132 will not cause blockage to the fastening strip 3231, which helps the user to pull the lid body 32 in the direction away from the first end panel 311; after the lid body 32 moves a distance (i.e., when there is no guide structure 3132 above the fastening strip 3231), the user may directly removes the lid body 32.

Those skilled in the art can appreciate that the above-described preferred solutions may be freely combined and superimposed without conflict.

It should be appreciated that the above-described embodiments are merely exemplary rather than non-limiting, and that various obvious or equivalent modifications to and substitutes for the above-described details made by those skilled in the art without departing from the basic principles of the present utility model, are all included within the scope of the appended claims of the present utility model.

## Claims

1. A module mounting structure for achieving mounting of a first module and a second module to each other, wherein the module mounting structure comprises a first mounting structure disposed on a side surface of the first module and a second mounting structure disposed on a side surface of the second module;
the first mounting structure comprises at least one slide rail comprising a connection portion and an extension portion, the extension portion being connected to the first module via the connection portion, a sliding groove being formed between the extension portion and the first module; an insertion notch is provided on the extension portion;
the second mounting structure comprises at least one hook at a position corresponding to the slide rail; the hook is connected to the second module;
at least a portion of the hook may extend through the insertion notch into the sliding groove; when the hook and the insertion notch are staggered in position, the hook located in the sliding groove hooks onto the extension portion so as to achieve the mounting and fixing of the first module and the second module to each other.

2. The module mounting structure according to claim 1, wherein the second module comprises a metal shell; the hook is formed by stamping of part of the metal shell;
the hook comprises a body portion and a hook body portion, the body portion is fixedly connected with the second module at both ends of the slide rail in the extension direction; the hook body portion is connected to the body portion in a direction perpendicular to the extension direction of the slide rail;
in the extension direction of the slide rail, a size of the hook body portion is smaller than that of the insertion notch.

3. The module mounting structure according to claim 1, wherein the slide rail comprises a plurality of slide rails, and a number of the insertion notches disposed on the extension portion of each of the slide rails is one or more;
a number of hooks included by the second mounting structure is smaller than or equal to that of the insertion notches; upon mounting, positions of the hooks correspond to those of the insertion notches.

4. The module mounting structure according to claim 3, wherein the slide rails comprise a first slide rail and a second slide rail arranged spaced apart, and the insertion notches of the first slide rail and the insertion notches of the second slide rail open towards each other;
the hook comprises a body portion and a hook body portion connected to each other, and the hook body portion is connected to the second module via the body portion; the hook body portions of the hooks corresponding to the first slide rail and the second slide rail face towards each other.

5. The module mounting structure according to claim 1, wherein one of the first mounting structure and the second mounting structure further comprises a mounting strip, the other of the first mounting structure and the second mounting structure further comprises a lug, a mounting hole is provided at an end of the mounting strip, and a fixing structure is fixed in the mounting hole through the lug; or the mounting hole mating with the lug is provided at an end of the slide rail.

6. The module mounting structure according to claim 1, wherein the slide rails comprise a first slide rail, a second slide rail and a third slide rail which are disposed at intervals and extend in a horizontal direction, the third slide rail being located between the first slide rail and the second slide rail;
the first slide rail and the second slide rail are disposed at a top and a bottom of the side surface of the first module, respectively;
the first mounting structure is integrally formed on the first module; the second mounting module is integrally formed on the second module.

7. A miner, wherein the miner comprises the module mounting structure and the first module and the second module according to any of claims 1-6; the first module and the second module are fixedly connected by the module mounting structure.

8. The miner according to claim 7, wherein the miner further comprises a third module fixed on the first module and/or the second module;
the first module and/or the second module and/or the third module comprises a box body and a lid body having a rectangular parallelepiped shape, the lid body being used for closing an opening of the box body;
the box body comprises a first end panel, a first side panel and a second side panel, the first side panel and the second side panel are connected to opposed ends of the first end panel, and a distance between the two side panels is smaller than a size of the first end plate so that an end of the lid body may abut against the end panel;
the side panel comprise a side panel body and a guide structure, the guide structure being fixed at an end of the side panel body adjacent to the first end panel; a distance between the guide structure and a bottom of the box body gradually reduces in a direction away from the first end panel towards the first end panel;
the lid body comprises a top plate, a first side plate and a second side plate, the first side plate and the second side plate being connected to opposed ends of the top plate; a fastening strip is disposed at a bottom of an inner wall of each of the first side plate and the second side plate, and a distance between the two fastening strips is equal to that between outer walls of the two side plate bodies;
a distance between inner walls of the first side plate and the second side plate is greater than or equal to that between outer walls of the guide structures on the first side panel and the second side panel;
a height of the fastening strips is smaller than or equal to a minimum distance between the guide structure and the bottom of the box body.

9. The miner according to claim 8, wherein a length of the guide structure is less than 40% of the length of the side panel; a bottom surface of the guide structure is inclined at an angle in a range of 0°-45°.

10. The miner according to claim 8 or 9, wherein the first module is a computing power module, the second module is a power supply module, and the third module is a control module;
a size of the side surface of the first module coincides with that of the side surface of the second module, or the size of the side surface of the second module is smaller than that of the side surface of the first module.
